# EUROPEAN PATENT SPECIFICATION

(11) **EP 3 513 081 B1**
(45) Date of publication and mention of the grant of the patent: **17.11.2021**
(21) Application number: 17768139.2
(22) Date of filing: 18.09.2017
(51) Int. Cl.: F16B 13/08

(54) **ATTACHMENT SYSTEM FOR PLASTERBOARD**
BEFESTIGUNGSSYSTEM FÜR EINE GIPSPLATTE
SYSTÈME DE FIXATION POUR PLAQUE DE PLÂTRE

(30) Priority: 16.09.2016 IT 201600093523
(43) Date of publication of application: 24.07.2019
(73) Proprietor: GIA S.p.A., 28069 Trecate (NO) (IT)
(72) Inventor: OCCHETTA, Mauro, 28060 Sozzago (IT); TAGLIABUE, Cristiano, 27010 Siziano (IT)
(74) Representative: Petraz, Gilberto Luigi
(86) International application number: PCT/EP2017/073487
(87) International publication number: WO 2018/050891

(56) References cited:
- FR-A1- 2 446 405

## Description

### FIELD OF THE INVENTION

The present invention concerns an attachment system for walls made of plasterboard, in particular an attachment system suitable to also support loads of a certain weight, such as radiators or suchlike, or other types of loads, for example wall units, shelves, television, furnishings and other

### BACKGROUND OF THE INVENTION

It is known that there are various attachment systems for plasterboard, including, for example, dowels that are suitably attached to the plasterboard walls so as to have a part that protrudes from the front side of the wall and, on the contrary, a part that passes through the plaster wall completely and is thus positioned on the rear part of the wall.

The plasterboard wall generally consists of two cardboard panels, between which a layer of plaster is located, to which additive materials are possibly added.

Traditional dowels for plasterboard generally have a screw associated with an element, generally conical, which is intended to expand in the rear part of the plasterboard wall and which has a length smaller than that of the screw. The dowels are also provided with a washer or collar that prevents the dowel from penetrating into the hole more than necessary.

These dowels for plasterboard, however, are not suitable for attaching loads of a certain weight, and moreover, generally, they can only be used once.

In the Italian patent no. 0001409095 a dowel for plasterboard is described which can be used for high loads and on walls of limited thickness. The dowel comprises a section, for example a rectangular section, which, expanding after a pin with which it cooperates has been screwed in, guarantees resistance to the load supported.

However, even this dowel, although it can be used for high loads, has some limitations, for example, in the steps of preparing the wall in which it is to be applied. In fact, the dowel is provided with a plate having a quadrangular element that has to be inserted into the wall.

The quadrangular element, for example rectangular or square, therefore requires that an aperture of the corresponding shape be made in the wall.

It is obvious that to make this square or rectangular aperture in the plasterboard wall requires a series of operations which may also be quite complex and which may adversely affect the quality and stability of the attachment.

Moreover, these operations must be repeated for each aperture and, normally, to attach a load of a certain weight, for example a radiator, it is necessary to attach at least two dowels to the plasterboard wall.

Another disadvantage of known dowels in general is the imperfect stability and efficiency of the attachment, due, for example, to their shape and their constructive complexity.

A known wall fixing device is also described in the document FR-A-2446405.

Other limitations and disadvantages of conventional solutions and technologies will be clear to a person of skill after reading the remaining part of the present description with reference to the drawings and the description of the embodiments that follow, although it is clear that the description of the state of the art connected to the present description must not be considered an admission that what is described here is already known from the state of the prior art.

There is therefore a need to obtain an attachment system for plasterboard that can overcome at least one of the disadvantages of the state of the art.

One purpose of the present invention is to obtain a high strength attachment system for plasterboard which allows to install a plate and a counter-plate respectively on the front side and on the rear side of a plasterboard wall without needing to access the rear side of the wall, but by making the installation only on the front side of the wall.

Another purpose of the present invention is to obtain an attachment system for plasterboard which is removable, which has optimum stability and attachment efficiency in any plasterboard wall whatsoever, and is particularly suitable for supporting high loads, such as for example a radiator or suchlike, or other high loads.

Another purpose of the present invention is to obtain an attachment system for plasterboard which can be attached to the plasterboard wall quickly and easily, and which does not involve complex or long operations to work the plasterboard wall.

Another purpose of the present invention is to obtain an attachment system for plasterboard which has large and stable support surfaces on the plasterboard wall, so as to guarantee high resistance to loads and so as not to compromise the structure of the plasterboard wall.

Another purpose of the present invention is a method of installing an attachment system for plasterboard that is quick, efficient and does not involve making complex working operations on the plasterboard wall.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, an attachment system for plasterboard, according to a first aspect of the invention comprises at least a plate made in a single piece of plastic material, having a large support surface and able to be positioned on a first side of a plasterboard wall and at least a counter-plate made in a single piece of metal material, able to be positioned on a second side of the plasterboard wall, opposite the first side, and able to be screwed to a support element associated with the plate; the plate is provided with at least a bushing or plate hub integrated in it and able to be inserted into a through hole made in the plasterboard wall; said bushing or plate hub is provided with a through hole through which said support element can pass; the counter-plate is configured to rotate with respect to the support element from at least a position of insertion in the plasterboard wall and at least a resting position on the second side, obtained following the screwing and clamping of the support element. Said bushing has an external diameter comprised between 20 mm and 50 mm and preferably equal to about 35 mm.

The bushing and the hole made in the plasterboard wall are of a substantially circular shape.

The counter-plate comprises at least a removable pawl and having a threaded part which can be screwed to the support element.

The pawl can be disposed in a direction substantially transverse with respect to a substantially longitudinal direction of development of the counter-plate.

The counter-plate can comprise a housing seating of the pawl, a heavier segment made on one side of the seating and a lighter segment made on the other side of the seating.

In some embodiments, the counter-plate comprises flat elements resting on the corresponding side of the plasterboard wall.

The support element comprises a portion of an arched shape situated at the opposite end with respect to the threaded part.

Another purpose of the invention is a method for positioning and clamping an attachment system for plasterboard, comprising making a hole on a plasterboard wall; inserting a horizontally tilting counter-plate inside the hole so that it goes into position in proximity to the internal side of the plasterboard wall; the counter-plate is at least partly screwed to a support element associated with a plate, having a large support surface and able to be located on the external side of the plasterboard wall, said plate is provided with at least a bushing or plate hub able to be inserted into a through hole made in the plasterboard wall, said bushing or plate hub is provided with a through hole through which said support element can pass; screwing the support element with consequent positioning of the counter-plate so as to rest stably on the internal side and consequent stable support of the plate on the external side, wherein said plate is made in a single piece of plastic material and said counter-plate is made in a single piece of metal material. Said bushing is integrated in the plate and has an external diameter comprised between 20 mm and 50 mm and preferably equal to about 35 mm.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a three-dimensional and exploded view of an attachment system for plasterboard according to the invention;
- fig. 2a is a view in lateral elevation, and partly in section, of the present attachment system in a step of insertion into a plasterboard wall;
- fig. 2b is a view in lateral elevation, and partly in section, of the present attachment system in a clamped configuration;
- fig. 3 is a three-dimensional view that shows a part of the present system protruding from the internal side of the plasterboard wall;
- fig. 4 is a three-dimensional view that shows a part of the present system protruding from the external side of the plasterboard wall and able to support any load whatsoever.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We shall now refer in detail to the various embodiments of the present invention, of which one or more examples are shown in the attached drawing. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

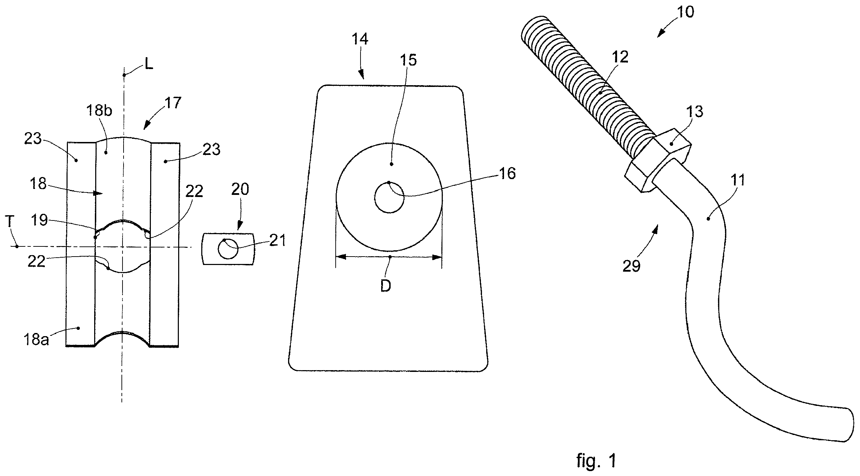

With reference to fig. 1 of the attached drawings, an attachment system 10 according to the invention comprises a support element 29 of a load provided with a portion 11 able to accommodate the load, for example of an arched shape, and a threaded part 12.

At least one nut 13 is screwed into the threaded portion 12, and is shown in the drawing at the end of the threaded portion 12 facing the portion 11 that supports the load.

The present attachment system 10 also comprises a plate 14 provided with a bushing 15 or plate hub.

The bushing 15 is of a cylindrical shape and internally comprises a through hole 16, able to be passed through by the threaded part 12 of the support element 29.

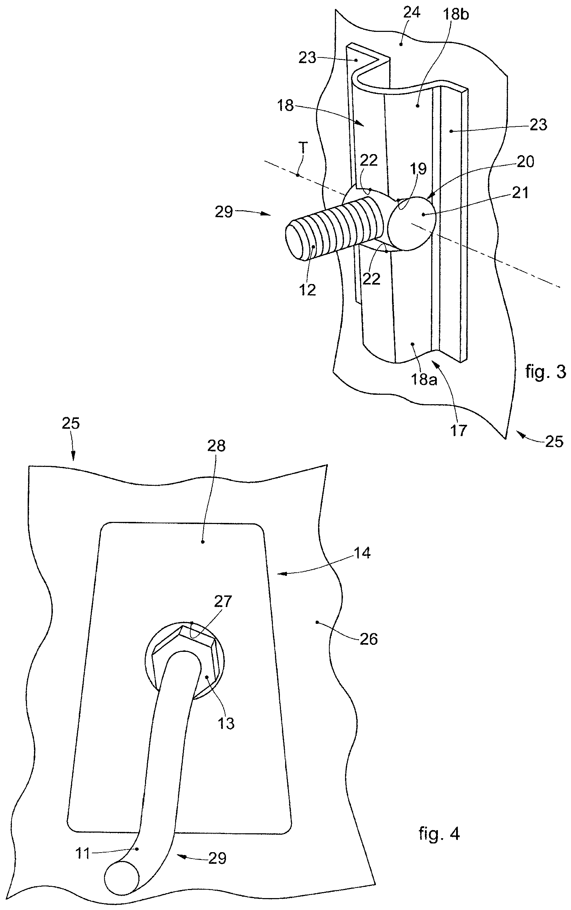

The present attachment system 10 also comprises a counter-plate 17, see also fig. 3, provided with an arched portion 18, in which a housing seating 19 of a pawl 20 is made.

The pawl 20 also includes a threaded part, in this case a through and threaded hole 21, able to engage with the threaded part 12 of the support element 29.

The seating 19 can be made in a direction T, which is substantially transverse to a direction L of development and extension of the arched part 18, and therefore of the counter-plate 17.

The seating 19 has a substantially cylindrical shape and substantially corresponding to the cylindrical shape of the pawl 20.

In correspondence with the seating 19 and on two opposite sides of it, hollows 22 are made, substantially in the direction L, which allow the counter-plate 17 to rotate by 90° and more, with the support element 11 installed with its threaded part 12 in the pawl 20. This ensures the movement of the counter-plate 17 and guarantees that it is put in a vertical clamping position.

The counter-plate 17 comprises flat elements 23 at the sides of the arched part 18; the flat elements 23 are able to guarantee an optimal support surface on an internal side 24 of a plasterboard wall 25.

The flat elements 23 are preferably made on the whole extension of the counterweight 17.

The plasterboard wall 25 also comprises an external side 26, see also fig. 4, from which the support element 29 of the attachment system 10 protrudes.

As can be seen, the arched part 18 and the two flat elements 23 form a substantially inverted U-shaped structure which guarantees excellent stability and support of the counter-plate 17 and at the same time an optimum positioning of the screw-in pawl 20 of the threaded part 12.

With respect to the seating 19 where the pawl 20 can be accommodated, the arched part 18 has a segment 18a with a greater length and a segment 18b of a smaller length.

The segments 18a and 18b have been made with different lengths in order to provide that segment 18a has a greater weight than the segment 18b. The segments 18a and 18b of greater and smaller weight could also be made in other ways than those shown.

In the plasterboard wall 25 where the present attachment system 10 is to be applied, a through hole 27 is made, able to house the bushing 15. The through hole 27 is of a substantially circular shape.

The through hole 27 is made quickly and effectively by means of any suitable instrument, such as a drill or suchlike, therefore without needing to make quadrangular or other shaped apertures.

It has been found experimentally that a bushing 15 with an external diameter D comprised between 20 and 50 mm, housed in a hole 27 of substantially corresponding sizes, allows to obtain an optimum distribution of the loads and optimum resistance of the present attachment system 10, and in particular of the support member 29. A bushing 15 with a diameter of about 35 mm has proved to be particularly effective and optimal.

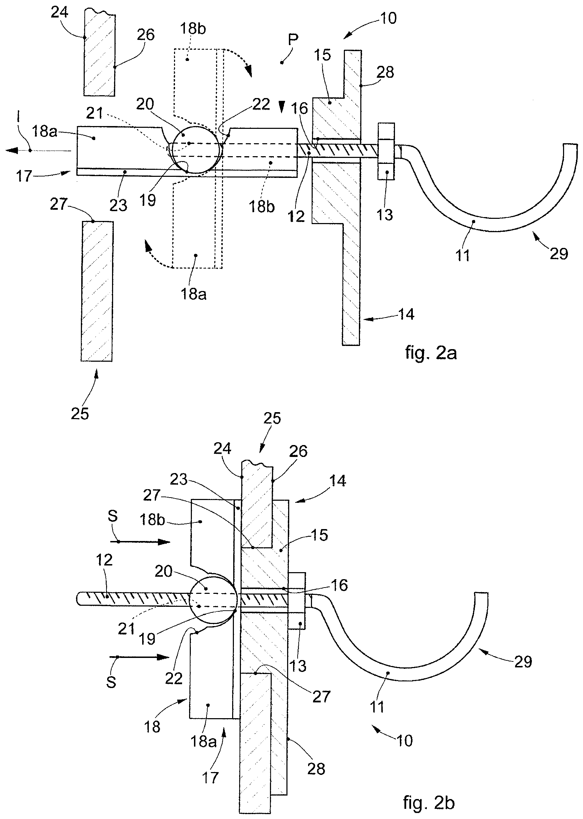

Before it is inserted into the plasterboard wall 25, the present attachment system 10 appears for example as shown in fig. 2a. The pawl 20 is inserted into the corresponding seating 19 of the counter-plate 17, while the threaded portion 12 of the support element 29 passes, preferably with a precise coupling, through the through hole 16 made in the plate 14, starting from the surface 28 of the plate 14 opposite to that on which the bushing 15 is made.

The threaded portion 12 is also at least partly screwed to the hole 21 of the pawl 20, as in fig. 2a for example.

In this situation, the counter-plate 17 can rotate about the pawl 20 and hence, in short, around the axis defined by the direction T.

The segment 18a, as we said, weighs more than the section 18b, so the counter-plate 17 tends to rotate with respect to the pawl 20 and to assume, through gravity, a substantially vertical position parallel to the internal side 24 of the plasterboard wall 25. This situation is shown by dashes in fig. 2.

To insert the counter-plate 17 into the hole 27 of the plasterboard wall 25 and to insert the bushing 15 into said hole 27, substantially in a direction I, it is therefore necessary to rotate the counter-plate 17 so that it assumes an inclined or substantially horizontal position, as shown in fig. 2a with a continuous line. To maintain this position, it is necessary to hold the counter-plate 17 pressed, so that it does not rotate with respect to the pawl 20, for example in direction P.

In this insertion position with the counter-plate 17 substantially horizontal, the threaded portion 12 is screwed to the pawl 20 substantially in correspondence with the end, so as to allow a complete rotation of about 90° of the counter-plate 17 with respect to the pawl 20.

If the threaded part 12 is screwed more into the pawl 20 so that it protrudes so much that it exceeds the hollows 22, the rotation of the counter-plate 17 is prevented.

The insertion direction I of the bushing 15 and of the counter-plate 17 is substantially orthogonal to the direction of rotation T of the counter-plate 17.

When the counter-plate 17 has passed completely beyond the hole 27 made in the plasterboard wall 25, it will rotate spontaneously, as explained above, so as to assume a substantially vertical position due to the greater weight of the segment 18a than the segment 18b.

At this point, by screwing the support element 29 further inside the threaded hole 21 of the pawl 20, the counter-plate 17 will approach the internal side 24 of the plasterboard wall 25 in direction S, see fig. 2b, until the flat elements 23 reach the internal side 24 and rest firmly on the surface of the internal side 24.

During the screwing of the support element 29, the pawl 20 remains stationary in position, thanks to the contact against the walls of the corresponding seating 19 made in the arched part 18.

The support element 29 could naturally provide a support portion 11 with a different shape from the one shown, depending on the load that the attachment system 10 has to support. Therefore, the support portion 11 could be in the shape of a ring or could consist of a suitably shaped head which allows to screw the threaded part 12.

The final situation of the attachment system 10 fully inserted and clamped to the plasterboard wall is shown in figs. 2b, 3 and 4: the counter-plate 17 is suitably resting on the internal side 24, thanks also to the flat elements 23 which adhere perfectly to the surface of the internal side 24 of the plasterboard wall 25, so as to have a wide support surface.

The plasterboard wall 25, see fig. 2b, in the zone where the present attachment system 10 is attached, is advantageously enclosed between the plate 14 with a large support surface and between the flat elements 23 which also guarantee a large support surface. The present attachment system 10 thus guarantees a high resistance to stresses.

Furthermore, when clamping is complete, the nut 13 of the support element rests on the surface 28 of the plate 14 opposite that where the bushing 15 is made.

The present attachment system 10 can be advantageously and effectively used to support loads of a certain weight: for example by providing at least a pair of attachment systems 10 it is possible to effectively support a radiator or suchlike.

However, the present attachment system 10 can also be used effectively to support other types of loads to be placed on a plasterboard wall, such as wall units, shelves, televisions, furnishing articles or other.

The counter-plate 17 is made in a single piece from a metal plate or sheet.

The plate 14 is made in a single piece of plastic material, and with the bushing 15 integrated in it, in which the through hole 16 is made.

Moreover, the present attachment system 10 can be advantageously completely dismantled and reused, so that it can possibly be removed from the plasterboard wall 25 and possibly reused for other attachments.

The present attachment system 10 therefore allows the robust attachment of a load to a plasterboard wall by solid and resistant elements, such as the plate 14, the support element 29, and the counter-plate 17.

The assembly of the present attachment system 10 is advantageously carried out on the front side of the plasterboard wall, without needing to access the internal or rear side of the wall.

The present attachment system 10 can therefore advantageously be applied to finished plasterboard walls as well.

It is clear that modifications and/or additions of parts may be made to the attachment system for plasterboard as described heretofore, without departing from the field and scope of the present invention.

It is also clear that, although the present invention has been described with reference to some specific examples, a person of skill in the art shall certainly be able to achieve many other equivalent forms of attachment systems for plasterboard, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Attachment system for plasterboard, **characterized in that** it comprises at least a plate (14) made in a single piece of plastic material, having a large support surface and able to be positioned on a first side (26) of a plasterboard wall (25), and at least a counter-plate (17) made in a single piece of metal material, able to be positioned on a second side (24) of the plasterboard wall (25), opposite said first side (26), and able to be screwed to a support element (29) associated with said plate (14), said plate (14) being provided with at least a bushing or plate hub (15) integrated in it and able to be inserted into a through hole (27) made in the plasterboard wall (25), said bushing or plate hub (15) being provided with a through hole (16) through which said support element (29) can pass, said counter-plate (17) being configured to rotate with respect to said support element (29) from at least a position of insertion in said plasterboard wall (25) to at least a resting position on one said second side (24), obtained following the screwing and clamping of the support element (29), wherein said bushing (15) and said hole (27) made in the plasterboard wall (25) are of a substantially circular shape, wherein said bushing (15) has an external diameter (D) comprised between 20 mm and 50 mm and preferably equal to about 35 mm.

2. Attachment system as in claim 1, **characterized in that** said counter-plate (17) comprises at least a removable pawl (20) and having a threaded part (21) which can be screwed to the support element (29).

3. Attachment system as in claim 2, **characterized in that** said pawl (20) is disposed in a direction (T) substantially transverse with respect to a substantially longitudinal direction (L) of development of said counter-plate (17).

4. Attachment system as in claim 2, **characterized in that** said counter-plate (17) comprises a housing seating (19) of said pawl (20), a heavier segment (18a) made on one side of said seating (19) and a lighter segment (18b) made on the other side of said seating (19).

5. Attachment system as in any claim hereinbefore, **characterized in that** said counter-plate (17) comprises flat elements (23) resting on the corresponding side (24) of the plasterboard wall (25).

6. Attachment system as in any claim hereinbefore, **characterized in that** said support element (29) comprises a portion (11) of an arched shape situated at the opposite end with respect to said threaded part (12).

7. Method for positioning and clamping an attachment system for plasterboard, **characterized in that** it comprises: making a hole (27) on a plasterboard wall (25); inserting a horizontally tilting counter-plate (17) inside said hole (27) so that it goes into position in proximity to the internal side (24) of the plasterboard wall (25), said counter-plate (17) being at least partly screwed to a support element (29) associated with a plate (14), having a large support surface and able to be located on the external side (26) of the plasterboard wall (25), said plate (14) being provided with at least a bushing or plate hub (15) able to be inserted into a through hole (27) made in the plasterboard wall (25), said bushing or plate hub (15) being provided with a through hole (16) through which said support element (29) can pass; screwing said support element (29) with consequent positioning of said counter-plate (17) so as to rest stably on said internal side (24) and consequent stable support of the plate (14) on the external side (26), wherein said plate (14) is made in a single piece of plastic material and said counter-plate (17) is made in a single piece of metal material, said bushing (15) being integrated in the plate (14) and having an external diameter (D) comprised between 20 mm and 50 mm and preferably equal to about 35 mm.

## Patentansprüche

1. Befestigungssystem für Gipskartonplatten,
**dadurch gekennzeichnet, dass**
es mindestens eine Platte (14), die aus einem einzigen Stück Kunststoffmaterial hergestellt ist, mit einer großen Auflagefläche umfasst und auf einer ersten Seite (26) einer Gipskartonwand (25) positioniert werden kann,
und mindestens eine Gegenplatte (17) umfasst, die aus einem einzigen Stück Metallmaterial hergestellt ist, auf einer zweiten Seite (24) der Gipskartonwand (25) gegenüber der ersten Seite (26) positioniert werden kann und an ein mit der Platte (14) verbundenes Trägerelement (29) geschraubt werden kann,
wobei die Platte (14) mit mindestens einer in sie integrierten Buchse oder Plattennabe (15) versehen ist, die in ein in der Gipskartonwand (25) ausgebildetes Durchgangsloch (27) eingesetzt werden kann, wobei die Buchse oder Plattennabe (15) mit einem Durchgangsloch (16) versehen ist, durch das das Trägerelement (29) hindurchgehen kann,
wobei die Gegenplatte (17) so konfiguriert ist, dass sie sich in Bezug auf das Stützelement (29) aus mindestens einer Position des Einsetzens in die Gipskartonwand (25) in mindestens eine Ruheposition auf einer der zweiten Seiten (24) dreht, die nach dem Verschrauben und Festklemmen des Trägerelements (29) erreicht wird,
wobei die Buchse (15) und das Loch (27) in der Gipskartonwand (25) eine im Wesentlichen kreisförmige Form aufweisen, wobei die Buchse (15) einen Außendurchmesser (D) zwischen 20 mm und 50 mm und vorzugsweise von etwa 35 mm aufweist.

2. Befestigungssystem nach Anspruch 1,
**dadurch gekennzeichnet, dass**
die Gegenplatte (17) mindestens eine abnehmbare Sperrklinke (20) umfasst und ein Gewindeteil (21) aufweist, das mit dem Trägerelement (29) verschraubt werden kann.

3. Befestigungssystem nach Anspruch 2,
**dadurch gekennzeichnet, dass**
die Sperrklinke (20) in einer Richtung (T) angeordnet ist, die im Wesentlichen quer zu einer im Wesentlichen längs verlaufenden Richtung (L) der Entwicklung der Gegenplatte (17) verläuft.

4. Befestigungssystem nach Anspruch 2,
**dadurch gekennzeichnet, dass**
die Gegenplatte (17) einen Gehäusesitz (19) für die Sperrklinke (20), ein schwereres Segment (18a) auf einer Seite des Sitzes (19) und ein leichteres Segment (18b) auf der anderen Seite des Sitzes (19) aufweist.

5. Befestigungssystem nach einem der vorangehenden Ansprüche,
**dadurch gekennzeichnet, dass**
die Gegenplatte (17) flache Elemente (23) aufweist, die auf der entsprechenden Seite (24) der Gipskartonwand (25) aufliegen.

6. Befestigungssystem nach einem der vorangehenden Ansprüche,
**dadurch gekennzeichnet, dass**
das Trägerelement (29) einen Abschnitt (11) mit gewölbter Form aufweist, der sich an dem dem Gewindeteil (12) gegenüberliegenden Ende befindet.

7. Verfahren zum Positionieren und Klemmen eines Befestigungssystems für Gipskartonplatten,
**dadurch gekennzeichnet, dass**
es umfasst:
Herstellen eines Lochs (27) in einer Gipskartonwand (25);
Einsetzen einer horizontal kippbaren Gegenplatte (17) in das Loch (27), so dass sie in der Nähe der Innenseite (24) der Gipskartonwand (25) positioniert wird, wobei die Gegenplatte (17) zumindest teilweise mit einem Trägerelement (29) verschraubt ist, das mit einer Platte (14) verbunden ist, die eine große Auflagefläche aufweist und an der Außenseite (26) der Gipskartonwand (25) angeordnet werden kann, wobei die Platte (14) mit mindestens einer Buchse oder Plattennabe (15) versehen ist, die in ein in der Gipskartonwand (25) ausgebildetes Durchgangsloch (27) eingesetzt werden kann, wobei die Buchse oder Plattennabe (15) mit einem Durchgangsloch (16) versehen ist, durch das das Trägerelement (29) hindurchgeführt werden kann;
Verschrauben des Trägerelements (29) mit anschließender Positionierung der Gegenplatte (17), so dass sie stabil auf der Innenseite (24) ruht, und anschließender stabiler Abstützung der Platte (14) auf der Außenseite (26), wobei die Platte (14) aus einem einzigen Stück Kunststoffmaterial hergestellt ist und die Gegenplatte (17) aus einem einzigen Stück Metallmaterial hergestellt ist, wobei die Buchse (15) in die Platte (14) integriert ist und einen Außendurchmesser (D) zwischen 20 mm und 50 mm und vorzugsweise gleich etwa 35 mm aufweist.

## Revendications

1. Système de fixation pour plaque de plâtre, **caractérisé en ce qu'**il comprend au moins une plaque (14) faite en une seule pièce de matière plastique, présentant une grande surface d'appui et apte à être positionnée sur une première face (26) d'une paroi (25) en plaque de plâtre, et au moins une contre-plaque (17) faite en une seule pièce de matériau métallique, apte à être positionnée sur un deuxième côté (24) de la paroi (25) en plaque de plâtre, à l'opposé dudit premier côté (26), et apte à être vissée à un élément de support (29) associé à ladite plaque (14), ladite plaque (14) étant munie d'au moins une douille ou moyeu de plaque (15) intégré à elle et apte à être inséré dans un trou traversant (27) pratiqué dans la paroi (25) en plaque de plâtre, ladite douille ou moyeu de plaque (15) étant pourvue d'un trou traversant (16) à travers lequel ledit élément de support (29) est apte à passer, ladite contre-plaque (17) étant configurée pour tourner par rapport audit élément de support (29) depuis au moins une position d'insertion dans ladite paroi (25) en plaque de plâtre vers au moins une position de repos sur un dit deuxième côté (24), obtenue suite au vissage et au serrage de l'élément de support (29), ladite douille (15) et ledit trou (27) pratiqué dans la paroi (25) en plaque de plâtre étant de forme sensiblement circulaire, ladite douille (15) ayant un diamètre extérieur (D) compris entre 20 mm et 50 mm et de préférence égal à environ 35 mm.

2. Système de fixation selon la revendication 1, **caractérisé en ce que** ladite contre-plaque (17) comprend au moins un élément d'encliquetage amovible (20) et comportant une partie filetée (21) qui est apte à être vissée à l'élément de support (29).

3. Système de fixation selon la revendication 2, **caractérisé en ce que** ledit élément d'encliquetage (20) est disposé selon une direction (T) sensiblement transversale par rapport à une direction sensiblement longitudinale (L) de développement de ladite contre-plaque (17).

4. Système de fixation selon la revendication 2, **caractérisé en ce que** ladite contre-plaque (17) comprend un siège de siège (19) dudit élément d'encliquetage (20), un segment plus lourd (18a) réalisé sur un côté dudit siège (19) et un segment plus léger (18b) réalisé sur l'autre côté dudit siège (19).

5. Système de fixation selon l'une quelconque des revendications précédentes, **caractérisé en ce que** ladite contre-plaque (17) comprend des éléments plats (23) reposant sur le côté correspondant (24) de la paroi (25) en plaque de plâtre.

6. Système de fixation selon l'une quelconque des revendications précédentes, **caractérisé en ce que** ledit élément de support (29) comprend une portion (11) de forme arquée située à l'extrémité opposée par rapport à ladite partie filetée (12).

7. Procédé de positionnement et de serrage d'un système de fixation pour plaque de plâtre, **caractérisé en ce qu'**il comprend : le fait de réaliser un trou (27) sur une paroi (25) en plaque de plâtre ; le fait d'insérer une contre-plaque (17) basculant horizontalement à l'intérieur dudit trou (27) de manière à ce qu'elle se place à proximité du côté interne (24) de la paroi (25) en plaque de plâtre, ladite contre-plaque (17) étant au moins en partie vissée à un élément de support (29) associé à une plaque (14), présentant une grande surface d'appui et apte à être située sur le côté extérieur (26) de la paroi (25) en plaque de plâtre, ladite plaque (14) étant munie d'au moins une douille ou moyeu de plaque (15) apte à être insérée dans un trou traversant (27) pratiqué dans la paroi (25) en plaque de plâtre, ladite douille ou moyeu de plaque (15) étant pourvue d'un trou traversant (16) à travers lequel ledit élément de support (29) est apte à passer ; le fait de visser ledit élément de support (29) avec un positionnement de ladite contre-plaque (17) qui en résulte de manière à reposer de façon stable sur ledit côté interne (24) et un support stable de la plaque (14) sur le côté externe (26) qui en résulte, ladite plaque (14) étant faite en une seule pièce de matière plastique et ladite contre-plaque (17) étant faite en une seule pièce de matériau métallique, ladite douille (15) étant intégrée dans la plaque (14) et ayant un diamètre extérieur (D) compris entre 20 mm et 50 mm et de préférence égal à environ 35 mm.
